# EUROPÄISCHE PATENTANMELDUNG

(11) **EP 2 813 408 A1**
(43) Veröffentlichungstag der Anmeldung: **17.12.2014**
(21) Anmeldenummer: 14168832.5
(22) Anmeldetag: 19.05.2014
(51) Int. Cl.: B60W 50/00, B60W 50/08, B60W 40/09, B60W 30/14, B60W 30/16

(54) **Verfahren und Vorrichtung zum Betreiben eines Fahrzeugs**

(30) Priorität: 12.06.2013 DE 102013210941
(71) Anmelder: ROBERT BOSCH GMBH, 70442 Stuttgart (DE)
(72) Erfinder: Pink, Oliver, 70469 Stuttgart (DE); Nordbruch, Stefan, 70806 Kornwestheim (DE)

(57) **Zusammenfassung**

Die Erfindung betrifft ein Verfahren zum Betreiben eines Fahrzeugs, wobei eine Fahrzeugführung eines Fahrers des Fahrzeugs überwacht wird (101), so dass basierend auf der überwachten Fahrzeugführung einen Fahrstil des Fahrers beschreibende Fahrparameter gebildet werden (103), welche einem Fahrerassistenzsystem des Fahrzeugs bereitgestellt werden (105), so dass bei einer Steuerung des Fahrzeugs mittels des Fahrerassistenzsystems der Fahrstil des Fahrers zumindest teilweise abgebildet wird (107).

Die Erfindung betrifft ferner eine entsprechende Vorrichtung (201), ein entsprechendes System (301) sowie ein entsprechendes Computerprogramm.

## Beschreibung

Die Erfindung betrifft ein Verfahren und eine Vorrichtung zum Betreiben eines Fahrzeugs. Die Erfindung betrifft ferner ein System zum Betreiben eines Fahrzeugs sowie ein Computerprogramm.

### Stand der Technik

Teil- und hochautomatisierte bzw. automatisiert oder autonom fahrende Systeme eines Fahrzeugs zeigen in der Regel ein bestimmtes Fahrverhalten in bestimmten Fahrsituationen (wie zum Beispiel beim Überholvorgang - defensiv, sportlich uns so weiter). Dieses Verhalten wird üblicherweise standardmäßig einprogrammiert.

Es kann vorkommen, dass ein Fahrer des Fahrzeugs in diesen Fahrsituationen aber anders fährt im Vergleich zu den vorgenannten Systemen. Ein Fahrverhalten des Fahrers kann somit verschieden von einem Fahrverhalten der Systeme sein.

Aus der Offenlegungsschrift EP 2 293 255 A1 ist ein Verfahren zur Steuerung eines Kraftfahrzeugs bekannt. Hierbei wird ein Fahrerverhalten gemessen und analysiert, um Systeme oder Systemteile des Fahrzeugs freizuschalten. Der Fahrer wird also bewertet. Sofern er als ausreichend gut bewertet wird, werden die Systeme freigeschaltet. Sofern die Bewertung als nicht ausreichend gut bewertet wird, erfolgt keine Freischaltung.

Nachteilig an den bekannten Systemen ist insbesondere, dass keine Anpassung an einen Fahrstil des Fahrers erfolgt. Dies kann insbesondere dazu führen, dass der Fahrer solche Systeme abschaltet oder deaktiviert, da er diese als unbequem und nicht vertraut, also fremd, empfindet. Dies kann wiederum dazu führen, dass dadurch in bestimmten kritischen Verkehrssituationen eine Fahrzeugsicherheit beeinträchtigt werden kann, da die Systeme nicht mehr oder nur eingeschränkt in eine Fahrzeugführung eingreifen können.

### Offenbarung der Erfindung

Die der Erfindung zugrunde liegende Aufgabe kann darin gesehen werden, ein Verfahren zum Betreiben eines Fahrzeugs bereitzustellen, das die bekannten Nachteile überwindet und eine verbesserte Akzeptanz bei einem Fahrer des Fahrzeugs bewirkt.

Die der Erfindung zugrunde liegende Aufgabe kann auch darin gesehen werden, eine entsprechende Vorrichtung zum Betreiben eines Fahrzeugs bereitzustellen.

Die der Erfindung zugrunde liegende Aufgabe kann auch darin gesehen werden, ein entsprechendes System zum Betreiben eines Fahrzeugs anzugeben.

Ferner kann die der Erfindung zugrunde liegende Aufgabe darin gesehen werden, ein entsprechendes Computerprogramm bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Verfahren zum Betreiben eines Fahrzeugs bereitgestellt, wobei eine Fahrzeugführung eines Fahrers des Fahrzeugs überwacht wird, so dass basierend auf der überwachten Fahrzeugführung einen Fahrstil des Fahrers beschreibende Fahrparameter gebildet werden, welche einem Fahrerassistenzsystem des Fahrzeugs bereitgestellt werden, so dass bei einer Steuerung des Fahrzeugs mittels des Fahrerassistenzsystems der Fahrstil des Fahrers zumindest teilweise abgebildet wird.

Gemäß einem weiteren Aspekt wird eine Vorrichtung zum Betreiben eines Fahrzeugs bereitgestellt, umfassend eine Überwachungseinrichtung zum Überwachen einer Fahrzeugführung eines Fahrers des Fahrzeugs, eine Parameterbildungseinrichtung zum Bilden von einen Fahrstil des Fahrers beschreibenden Fahrparametern basierend auf der überwachten Fahrzeugführung und eine Bereitstellungseinrichtung zum Bereitstellen der Fahrparameter an ein Fahrerassistenzsystem.

Nach noch einem Aspekt wird ein System zum Betreiben eines Fahrzeugs bereitgestellt, umfassend die Vorrichtung zum Betreiben eines Fahrzeugs und ein Fahrerassistenzsystem, das ausgebildet ist, basierend auf den bereitgestellten Fahrparametern das Fahrzeug den Fahrstil des Fahrers zumindest teilweise abbildend zu steuern.

Gemäß einem anderen Aspekt wird ein Computerprogramm bereitgestellt, das Programmcode zur Durchführung des Verfahrens zum Betreiben eines Fahrzeugs umfasst, wenn das Computerprogramm auf einem Computer, insbesondere in einem Fahrerassistenzsystem, insbesondere in einer Steuerung eines Fahrerassistenzsystems, ausgeführt wird.

Die Erfindung umfasst also insbesondere den Gedanken, einen Fahrstil des Fahrers durch Überwachung seiner Fahrzeugführung zu erkennen und entsprechend nachzubilden oder nachzuahmen oder zu imitieren. Das heißt also insbesondere, dass das Fahrerassistenzsystem aufgrund der entsprechend gebildeten Fahrparameter in der Lage ist, den Fahrstil des Fahrers zumindest teilweise, vorzugsweise vollständig, abzubilden. Sofern also das Fahrerassistenzsystem das Fahrzeug zumindest teilweise automatisiert oder zumindest teilweise autonom steuert, insbesondere vollautomatisiert oder vollautonom steuert, wird der Fahrer diese Art der Steuerung als seine eigene wiedererkennen. Dies bewirkt in vorteilhafter Weise eine erhöhte Akzeptanz des Fahrers hinsichtlich der Steuerung des Fahrerassistenzsystems. Er wird also in der Regel das Fahrerassistenzsystem nicht deaktivieren. Dies bewirkt in vorteilhafter Weise, dass eine Fahrzeugsicherheit in bestimmten kritischen Situationen aufgrund einer Abschaltung oder Deaktivierung des Fahrerassistenzsystems nicht beeinträchtigt oder vermindert ist, da das Fahrerassistenzsystem in eine Fahrzeugführung eingreifen kann. Dies insbesondere um beispielsweise eine Kollision zu vermeiden oder um beispielsweise eine Unfallschwere zu verringern.

Wenn im Folgenden der Begriff "automatisiert" verwendet wird, so kann anstelle oder zusätzlich der Begriff "autonom" verwendet oder mitgelesen werden und umgekehrt.

Fahrerassistenzsysteme im Sinne der vorliegenden Erfindung bezeichnen insbesondere elektronische Einrichtungen, die einen Fahrer in bestimmten Fahrsituationen unterstützen können. Solche Fahrerassistenzsysteme greifen insbesondere teilautomatisiert oder automatisiert in einen Antrieb und/oder eine Steuerung und/oder Signalisierungseinrichtungen des Fahrzeugs ein und/oder warnen mittels einer Mensch-Maschinen-Schnittstelle einen Fahrer kurz vor oder während einer kritischen Verkehrssituation. Hierfür können die Fahrerassistenzsysteme vorzugsweise in Wirkverbindung mit Aktoren und/oder Stellern des Fahrzeugs sein.

Fahrerassistenzsysteme im Sinne der vorliegenden Erfindung können insbesondere ausgebildet sein, das Fahrzeug selbstständig zu steuern, ohne dass der Fahrer Eingriffe in eine Fahrzeugführung durchführen muss. Das Fahrzeug wird in diesem Fall mittels des Fahrerassistenzsystems gesteuert. Insbesondere kann das Fahrerassistenzsystem ausgebildet sein, Teilaspekte der Fahrzeugführung zu steuern. Solche Teilaspekte können beispielsweise eine Fahrzeuglängsführung und/oder eine Fahrzeugquerführung sein.

Fahrparameter im Sinne der vorliegenden Erfindung beschreiben insbesondere einen Fahrstil des Fahrers. Das bedeutet beispielsweise, dass die Fahrparameter beschreiben, welchen Abstand der Fahrer in der Regel zu einem vorausfahrenden Fahrzeug einhält. Beispielsweise können die Fahrparameter beschreiben, mit welcher Verzögerung und/oder welcher Beschleunigung der Fahrer das Fahrzeug bremst oder beschleunigt. Beispielsweise können die Fahrparameter beschreiben, mit welcher Kurvengeschwindigkeit der Fahrer in eine Kurve mit einem bestimmten Kurvenradius einfährt und/oder diese durchfährt. Insbesondere können die Fahrparameter beschreiben, wie stark der Fahrer ein Bremspedal, ein Kupplungspedal und/oder ein Gaspedal betätigt. Insbesondere können die Fahrparameter beschreiben, zu welchen Zeitpunkten bezüglich einer Motordrehzahl der Fahrer in der Regel einen Gangwechsel vornimmt.

Weitere Fahrparameter, die einen Fahrstil des Fahrers beschreiben, können beispielsweise folgende Situationen beschreiben oder parametrisieren:
Eine Geschwindigkeit allgemein (nicht nur Kurvengeschwindigkeit, sondern zum Beispiel typische Geschwindigkeit auf Autobahnen, beispielsweise 100 km/h bis 150 km/h).

Welche Geschwindigkeitsdifferenz zur Wunschgeschwindigkeit nimmt der Fahrer in Kauf, bevor er eine Spur wechselt (fährt der Fahrer hinter einem LKW langsamer her oder schert er lieber gleich aus). Der Fahrparameter wäre hier beispielsweise die Geschwindigkeitsdifferenz und/oder ob der Fahrer hinter dem LKW bleibt oder ausschert.

Ein Seitenabstand, wie knapp, also mit welchem Abstand, fährt der Fahrer seitlich an Objekten, insbesondere weiteren Fahrzeugen, vorbei. Der Fahrparameter wäre hier insbesondere der Seitenabstand.

Geschwindigkeit in Engstellen: Wie schnell fährt der Fahrer durch eine Engstelle mit gegebener Breite (ist das automatische System schneller als der Fahrer selbst, findet der Fahrer das in der Regel hochgradig unangenehm). Der Fahrparameter wäre hier insbesondere die Geschwindigkeit, mit der der Fahrer sein Fahrzeug durch die Engstelle fährt.

Geschwindigkeit in Abhängigkeit von einer aktuellen Verkehrsdichte. Der Fahrparameter wäre hier insbesondere diese Geschwindigkeit.

Dass die Steuerung basierend auf den Fahrparametern den Fahrstil des Fahrers zumindest teilweise, insbesondere vollständig, abbildet, bedeutet also insbesondere, dass zumindest Teilaspekte des Fahrstils des Fahrers mittels des Fahrerassistenzsystems bei der Steuerung des Fahrzeugs umgesetzt werden. Im Extremfall wird der Fahrstil des Fahrers vollständig abgebildet. Das heißt also insbesondere, dass es von außen betrachtet keinen Unterschied zwischen der Steuerung des Fahrzeugs seitens des Fahrers oder seitens des Fahrerassistenzsystems gibt.

Gemäß einer Ausführungsform kann vorgesehen sein, dass eine während der Überwachung vorliegende Fahrsituation klassifiziert und die Fahrparameter der klassifizierten Fahrsituation zugeordnet werden, so dass, wenn eine bei der Steuerung des Fahrzeugs mittels des Fahrerassistenzsystems vorliegende Fahrsituation der klassifizierten Fahrsituation entspricht, das Fahrerassistenzsystem das Fahrzeug basierend auf den der klassifizierten Fahrsituation zugeordneten Fahrparametern steuert.

Das heißt also insbesondere, dass erfasst wird, welche konkrete Fahrsituation vorliegt, in der der Fahrer dieses oder jenes Verhalten gezeigt hat. Wenn dann bei der Steuerung des Fahrzeugs mittels des Fahrerassistenzsystems eine ähnliche oder sogar gleiche Fahrsituation vorliegt, kann dann das Fahrzeug entsprechend der Fahrsituation, die während der Überwachung vorgelegen hat, gesteuert werden. Somit kann also insbesondere in vorteilhafter Weise sichergestellt werden, dass in einer konkreten Fahrsituation das Fahrerassistenzsystem zumindest teilweise, insbesondere vollständig, das Fahrzeug so steuert, wie es auch der Fahrer tun würde.

Es findet also insbesondere ein Erfassen einer vorliegenden Fahrsituation mit anschließender Klassifizierung statt. Dies insbesondere während der Überwachung und insbesondere während der Steuerung des Fahrzeugs mittels des Fahrerassistenzsystems.

Nach einer Ausführungsform kann vorgesehen sein, dass eine momentane Fahrsituation erfasst wird. Eine momentane Fahrsituation kann insbesondere eine Situation sein, in der ein weiteres Fahrzeug vor dem Fahrzeug mit einer bestimmten Geschwindigkeit und einem bestimmten Abstand fährt. Das Fahrerassistenzsystem steuert dann insbesondere das Fahrzeug basierend auf einem Fahrparameter, der einem Abstand zu einem vorausfahrenden Fahrzeug zugeordnet ist oder entspricht, wobei dieser Fahrparameter zu einem zeitlich vor der momentanen Fahrsituation liegenden ähnlichen Fahrsituation, in der der Fahrer selbst das Fahrzeug gesteuert hat, gebildet wurde. Dies gilt insbesondere allgemein analog für beliebige Fahrsituationen. Es wird also allgemein in der momentanen Fahrsituation ermittelt, wie der Fahrer das Fahrzeug in einer zeitlich älteren ähnlichen Fahrsituation gesteuert hat. Dies wird dann in der momentanen Fahrsituation zumindest teilweise abgebildet.

Gemäß einer weiteren Ausführungsform kann vorgesehen sein, dass zur Klassifizierung die vorliegende Fahrsituation einer Fahrsituationsklasse, beispielsweise Autobahn, Landstraße, Stadt, Umweltbedingungen, ausgewählt aus der folgenden Gruppe von Fahrsituationenklassen zugeordnet wird: Überholmanöver, Kolonnenfahrt, Fahrt mit einer aktivierten adaptiven Geschwindigkeitsregeleinrichtung, Kurvenfahrt, teilautomatisierte Fahrt und automatisierte Fahrt.

Wenn also beispielsweise das Fahrerassistenzsystem während eines Überholmanövers das Fahrzeug zumindest teilweise automatisiert, insbesondere vollständig automatisiert, steuert, so wird es dies dann fast genauso tun, wie der Fahrer das Fahrzeug während des Überholmanövers steuern würde.

Die Zuordnung zwischen Fahrparametern und der klassifizierten Fahrsituation bewirkt in vorteilhafter Weise eine erhebliche Vereinfachung. Denn zur Steuerung des Fahrzeugs mittels des Fahrerassistenzsystems reicht es nun in der Regel, dass lediglich die Fahrparameter verwendet werden, die der klassifizierten Fahrsituation zugeordnet sind. Ein Datenaufwand und ein damit einhergehender erheblicher Speicherplatzbedarf können somit in vorteilhafter Weise reduziert werden. Auch kann eine entsprechend benötigte Verarbeitungszeit in vorteilhafter Weise erheblich reduziert werden.

Nach einer weiteren Ausführungsform kann vorgesehen sein, dass für die Überwachung zumindest ein Element ausgewählt aus der folgenden Gruppe von Elementen gemessen oder erfasst wird: Abstand zu einem dem Fahrzeug vorausfahrenden weiteren Fahrzeug, Abstand zu einem dem Fahrzeug nachfahrenden weiteren Fahrzeug, Geschwindigkeit eines dem Fahrzeug vorausfahrenden weiteren Fahrzeug, Geschwindigkeit eines dem Fahrzeug nachfahrenden weiteren Fahrzeug, zeitliches und/oder räumliches Geschwindigkeitsprofil, zeitliches und/oder räumliches Beschleunigungsprofil, Fahrzeugposition, Größe einer Lücke zwischen einem dem Fahrzeug vorausfahrenden weiteren Fahrzeug und einem oder mehreren dem weiteren Fahrzeug vorausfahrenden anderen Fahrzeugen, Fahrereingriffe in eine Fahrzeugführung, insbesondere Bremsen, Lenken, Beschleunigen, Lenken, Verhalten des Fahrers beim Einfahren eines anderen Fahrzeugs in die Lücke zwischen dem Fahrzeug des Fahrers und einem dem Fahrzeug des Fahrers vorausfahrenden weiteren Fahrzeug, Abstand zu weiteren Objekten, die nicht notwendigerweise ein Fahrzeug sein müssen, beispielsweise Leitplanken, stationäre Hindernisse, Abstände und/oder Geschwindigkeiten zu Fahrzeugen in einer anderen Fahrspur oder in anderen Fahrspuren.

Das heißt also insbesondere, dass beispielsweise ein Abstand zu einem dem Fahrzeug vorausfahrenden weiteren Fahrzeug gemessen wird. Dieser Abstand kann dann beispielsweise ein Fahrparameter sein, der einen Teilaspekt des Fahrstils des Fahrers beschreiben kann.

Allgemein können die vorgenannten Elemente beispielsweise jeweils einem Fahrparameter zugeordnet werden und/oder vorzugsweise Fahrparameter bilden, die dann dadurch in vorteilhafter Weise den Fahrstil des Fahrers zumindest teilweise, insbesondere vollständig, beschreiben können.

Nach einer anderen Ausführungsform kann vorgesehen sein, dass während der Überwachung ein Fahrzeugumfeld erfasst und das Fahrzeugumfeld beschreibende Fahrzeugumfelddaten gebildet werden, die den Fahrparametern zugeordnet werden, so dass, wenn ein bei der Steuerung des Fahrzeugs mittels des Fahrerassistenzsystems vorliegendes Fahrzeugumfeld zumindest teilweise dem während der Überwachung erfassten Fahrzeugumfeld entspricht, das Fahrerassistenzsystem das Fahrzeug basierend auf den Fahrparametern mit den zugeordneten Fahrzeugumfelddaten steuert.

Das heißt also insbesondere, dass der Fahrstil des Fahrers mit einem bestimmten Fahrzeugumfeld verknüpft wird. So wird der Fahrer in der Regel bei nasser Fahrbahn anders das Fahrzeug führen als bei einer trockenen Fahrbahn.

Wenn also bei der Steuerung des Fahrzeugs mittels des Fahrerassistenzsystems ein Fahrzeugumfeld vorliegt, das zumindest teilweise, insbesondere vollständig, dem während der Überwachung erfassten Fahrzeugumfeld entspricht, so wird das Fahrerassistenzsystem in vorteilhafter Weise das Fahrzeug zumindest teilweise, insbesondere vollständig, so steuern, wie es der Fahrer tun würde.

Das Erfassen des Fahrzeugumfelds kann beispielsweise ein Erfassen einer oder mehrerer Umweltbedingungen, beispielsweise Helligkeit, Tag-/ Nachtfahrt, Uhrzeit, Tunnel, Blendung, umfassen. Beispielsweise können solche Umweltbedingungen ein Wetter und ein Straßenzustand sein. Beispielsweise kann das Erfassen des Fahrzeugumfelds ein Erfassen einer oder mehrerer Verkehrsbedingungen umfassen. Solche Verkehrsbedingungen können beispielsweise ein Stau und Ampeln, auch Lichtzeichenanlagen genannt, sein.

Analog zu einem Erfassen des Fahrzeugumfelds kann nach einer weiteren Ausführungsform vorgesehen sein, dass eine Fahrzeugposition und/oder eine zu fahrende Route oder Fahrstrecke des Fahrzeugs und/oder eine Zeit, insbesondere eine Uhrzeit, und/oder ein Fahrerzustand, beispielsweise Müdigkeit, erfasst werden und entsprechenden Fahrparametern zugeordnet werden und/oder solche bilden, sodass, wenn eine bei der Steuerung des Fahrzeugs mittels des Fahrerassistenzsystems vorliegende Situation (beispielsweise eine Situation betreffend einer Fahrzeugposition und/oder einer zu fahrenden Route oder Fahrstrecke des Fahrzeugs und/oder einer Zeit, insbesondere einer Uhrzeit, und/oder eines Fahrerzustand, beispielsweise Müdigkeit) zumindest teilweise, insbesondere vollständig, der entspricht, die auch während der Überwachung vorlag, das Fahrerassistenzsystem das Fahrzeug basierend auf den entsprechenden Fahrparametern steuert.

Gemäß einer weiteren Ausführungsform kann vorgesehen sein, dass eine Anzahl an Fahrzeuginsassen erfasst wird und den Fahrparametern zugeordnet wird, so dass, wenn eine Anzahl an Fahrzeuginsassen bei der Steuerung des Fahrzeugs mittels des Fahrerassistenzsystems gleich der Anzahl an Fahrzeuginsassen während der Überwachung ist, das Fahrerassistenzsystem das Fahrzeug basierend auf den Fahrparametern mit der zugeordneten Anzahl an Fahrzeuginsassen steuert.

Das heißt also insbesondere, dass erfasst wird, ob der Fahrer alleine im Fahrzeug ist oder ob noch weitere Fahrzeuginsassen vorhanden sind, beispielsweise Kinder.

Nach einer anderen Ausführungsform kann vorgesehen sein, dass vor der Steuerung des Fahrzeugs mittels des Fahrerassistenzsystems die Fahrparameter mit einen sicheren Fahrstil beschreibenden Fahrsicherheitsparametern abgeglichen werden, so dass abhängig von dem Vergleich abgeglichene Fahrparameter gebildet werden, die dem Fahrerassistenzsystem bereitgestellt werden, so dass bei der Steuerung des Fahrzeugs mittels des Fahrerassistenzsystems der Fahrstil des Fahrers nur soweit abgebildet wird, wie dieser von dem sicheren Fahrstil umfasst ist.

Das heißt also insbesondere, dass beispielsweise ein Abgleich mit Verkehrsregeln oder mit einer Straßenverkehrsordnung durchgeführt wird. Beispielsweise kann hier ein Abgleich mit Geschwindigkeitsvorgaben und/oder Überholmanövervorgaben gemacht werden. Nur im Rahmen des gesetzlich Zulässigen wird dann das Fahrerassistenzsystem das Fahrzeug steuern. Insbesondere kann hier alternativ oder zusätzlich eine Beschränkung auf eine sichere Fahrweise, zum Beispiel Mindestabstände und/oder Maximalgeschwindigkeiten in Kurven, vorgesehen sein.

Das heißt also insbesondere, dass der Fahrstil des Fahrers nur so weit abgebildet wird aufgrund des Abgleichs, wie dies von dem sicheren Fahrstil umfasst ist.

Der sichere Fahrstil beschreibt insbesondere einen Fahrstil, der die gesetzlichen Vorgaben einhält und/oder bezeichnet oder charakterisiert eine sichere Fahrweise.

Nach einer Ausführungsform kann vorgesehen sein, dass zum Bilden der Fahrparameter ein Durchschnitt über mehrere überwachte Fahrten gebildet wird. Das heißt also insbesondere, dass während mehrerer Fahrten eine entsprechende Fahrzeugführung überwacht wird, wobei hier dann entsprechende Fahrparameter für die einzelnen Fahrten gebildet werden. Es kann dann vorzugsweise eine Durchschnittsbildung dieser so ermittelten oder gebildeten Fahrparameter stattfinden. Beispielsweise kann hier eine Gewichtung für die ermittelten Fahrparameter hinsichtlich bestimmter Fahrsituationen für die Durchschnittsbildung vorgesehen sein.

Nach einer Ausführungsform kann vorgesehen sein, dass die Überwachungseinrichtung einen oder mehrere Sensoren umfasst. Die Sensoren können beispielsweise gleich oder insbesondere unterschiedlich gebildet sein. Solche Sensoren können beispielsweise folgende Sensoren sein: Fahrzustandssensor, Fahrzeugumfeldsensor, Sensor eines Fahrerassistenzsystems, Positionssensor, insbesondere GPS-Sensor eines Navigationssystems, Positionssensor eines Nicht-Navigationssystems, Radarsensor, Beschleunigungssensor, Lenkwinkelsensor, Ultraschallsensor, optischer Sensor, Lidarsensor, Videosensor, Sensoren für eine Fahrerüberwachung, zum Beispiel Insassensensor, Aufmerksamskeitssensor.

Das heißt also insbesondere, dass die Überwachung der Fahrzeugführung des Fahrers mittels zumindest eines Sensors, insbesondere mittels mehrerer Sensoren, der vorgenannten Sensoren durchgeführt werden kann. Das heißt also insbesondere, dass basierend auf den entsprechenden Messdaten der Sensoren die Fahrparameter gebildet werden können. Beispielsweise kann mittels einer Innenraumkamera umfassend einen Videosensor überprüft werden, ob der Fahrer, beispielsweise bei einer Spurwechselabsicht oder einem Abbiegevorgang, regelmäßig einen Schulterblick durchführt. Dies ist insbesondere ein Zeichen für ein vorausschauendes Fahren. Beispielsweise kann beobachtet werden, ob der Fahrer bei hohen Geschwindigkeiten zu zu starken Lenkvorgängen, allgemein auch als ein Verreißen bezeichnet, neigt.

Um in vorteilhafter Weise sicherstellen zu können, dass stets der gleiche Fahrer überwacht wird, kann nach einer anderen Ausführungsform vorgesehen sein, dass den Fahrparametern eine Fahrerkennung zugeordnet wird. Eine solche Fahrerkennung kann beispielsweise ein biometrisches Merkmal des Fahrers umfassen. Wenn dann im Betrieb des Fahrzeugs die Fahrerkennung, beispielsweise das biometrische Merkmal, erfasst wird, so können dann zur Steuerung des Fahrzeugs seitens des Fahrerassistenzsystems die der Fahrerkennung zugeordneten Fahrparameter verwendet werden. Eine Fahrerkennung kann beispielsweise eine Chipkennung, beispielsweise von einem RFID-Chip, umfassen. Ein solcher Chip, insbesondere ein RFID-Chip, kann beispielsweise in einem Fahrzeugschlüssel eingebaut sein.

Die Erfindung wird im Folgenden anhand von bevorzugten Ausführungsbeispielen näher erläutert. Hierbei zeigen:
- Fig. 1: ein Ablaufdiagramm eines Verfahrens zum Betreiben eines Fahrzeugs,
- Fig. 2: eine Vorrichtung zum Betreiben eines Fahrzeugs,
- Fig. 3: ein System zum Betreiben eines Fahrzeugs und
- Fig. 4: ein Ablaufdiagramm eines weiteren Verfahrens zum Betreiben eines Fahrzeugs.

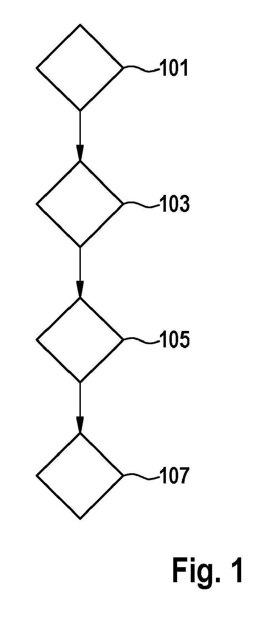

Fig. 1 zeigt ein Ablaufdiagramm eines Verfahrens zum Betreiben eines Fahrzeugs.

Gemäß einem Schritt 101 wird eine Fahrzeugführung eines Fahrers des Fahrzeugs überwacht. Es werden dann in einem Schritt 103 basierend auf der überwachten Fahrzeugführung Fahrparameter gebildet, die einen Fahrstil des Fahrers beschreiben. Diese Fahrparameter werden in einem Schritt 105 einem Fahrerassistenzsystem des Fahrzeugs bereitgestellt. So kann dann in einem Schritt 107 bei einer Steuerung des Fahrzeugs mittels des Fahrerassistenzsystems der Fahrstil des Fahrers zumindest teilweise, vorzugsweise vollständig, abgebildet werden.

Dies bewirkt in vorteilhafte Weise eine erhöhte Akzeptanz des Fahrerassistenzsystems beim Fahrer. Dieser wird dann in der Regel das Fahrerassistenzsystem angeschaltet lassen, sodass dieses dann in vorteilhafter Weise in bestimmten kritischen Situationen eingreifen und das Fahrzeug steuern kann. Dies kann in vorteilhafter Weise bewirken, dass in solchen kritischen Fahrsituationen eine Fahrzeugsicherheit erhöht wird.

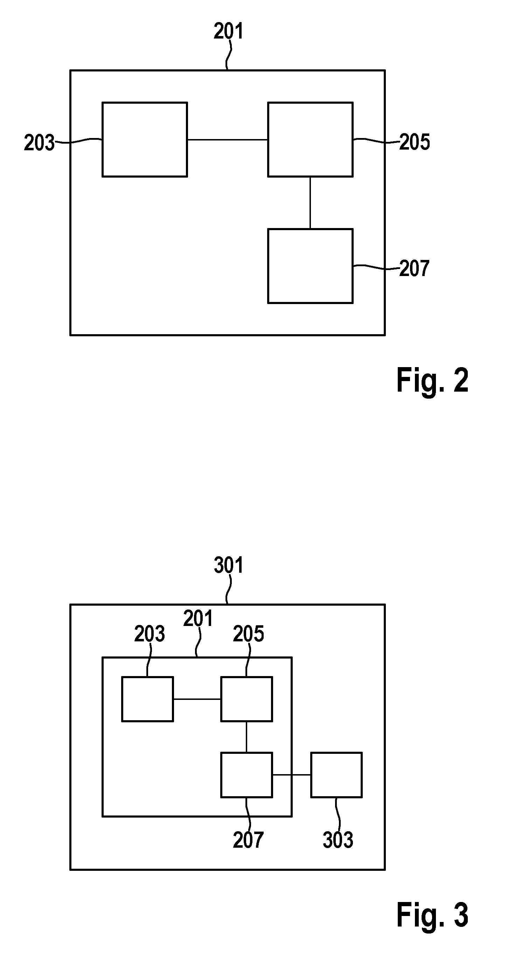

Fig. 2 zeigt eine Vorrichtung 201 zum Betreiben eines Fahrzeugs (nicht gezeigt).

Die Vorrichtung 201 umfasst eine Überwachungseinrichtung 203 zum Überwachen einer Fahrzeugführung eines Fahrers des Fahrzeugs. Ferner umfasst die Vorrichtung 201 eine Parameterbildungseinrichtung 205 zum Bilden von einen Fahrstil des Fahrers beschreibenden Fahrparametern basierend auf der überwachten Fahrzeugführung. Darüber hinaus umfasst die Vorrichtung 201 eine Bereitstellungseinrichtung zum Bereitstellen der Fahrparameter an ein Fahrerassistenzsystem, welches aber nicht notwendigerweise von der Vorrichtung 201 umfasst sein muss.

In einer nicht gezeigten Ausführungsform kann vorgesehen sein, dass die Überwachungseinrichtung 203 einen oder mehrere Sensoren umfasst, die ausgebildet sind, eine Fahrzeugführung des Fahrers zu erfassen. Hierfür können beispielsweise Videosensoren, Radarsensoren, Ultraschallsensoren, Lidarsensoren vorgesehen sein. Allgemein können solche Sensoren Umfeldsensoren sein, die ein Fahrzeugumfeld sensorisch erfassen können. Somit kann beispielsweise in vorteilhafter Weise erfasst werden, welchen Abstand der Fahrer des Fahrzeugs zu einem vorausfahrenden Fahrzeug einhält. Sensoren können beispielsweise Beschleunigungssensoren und/oder Lenkwinkelsensoren sein.

Fig. 3 zeigt ein System 301 zum Betreiben eines Fahrzeugs (nicht gezeigt).

Das System 301 umfasst die Vorrichtung 201 gemäß Fig. 2. Ferner umfasst das System 301 ein Fahrerassistenzsystem 303, das ausgebildet ist, basierend auf den bereitgestellten Fahrparametern das Fahrzeug derart zu steuern, dass der Fahrstil des Fahrers zumindest teilweise, vorzugsweise vollständig, abgebildet wird. Das heißt also insbesondere, dass das Fahrerassistenzsystem 303 das Fahrzeug zumindest annähernd so steuert, wie es der Fahrer in der konkret vorliegenden Fahrsituation tun würde.

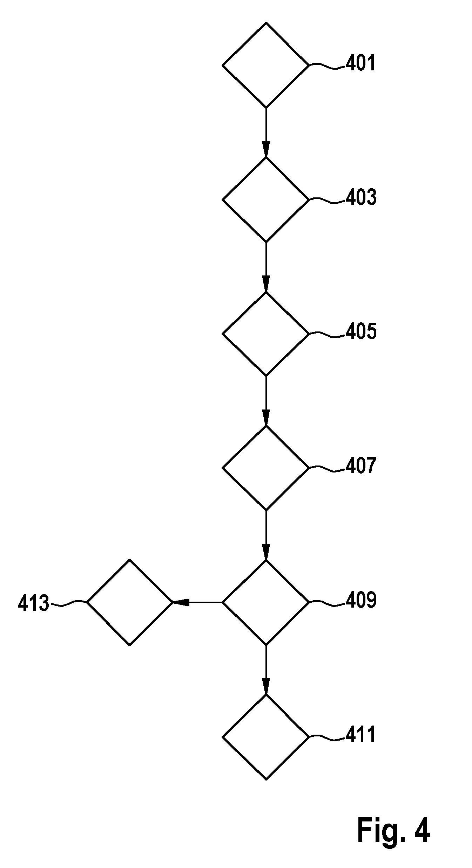

Fig. 4 zeigt ein Ablaufdiagramm eines weiteren Verfahrens zum Betreiben eines Fahrzeugs.

Gemäß einem Schritt 401 wird eine momentane oder vorliegende Fahrsituation erfasst und klassifiziert. In dem nun folgenden Ausführungsbeispiel wird der Anschaulichkeit halber angenommen, dass es sich bei der vorliegenden Fahrsituation um ein Überholmanöver handelt. Die folgenden Ausführungen sollen aber nicht auf ein Überholmanöver beschränkt sein. Es können beliebig andere Fahrsituationen vorgesehen sein, die dann entsprechend auch klassifiziert werden.

Gemäß einem Schritt 403 wird dann eine Fahrzeugführung eines Fahrers des Fahrzeugs während des Überholvorgangs überwacht. Beispielsweise kann vorgesehen sein, dass ein zeitliches und/oder räumliches Geschwindigkeitsund/oder Beschleunigungsprofil überwacht wird. Insbesondere können Relativabstände zwischen dem Fahrzeug und dem zu überholenden Fahrzeug oder den zu überholenden Fahrzeugen gemessen werden.

In einem Schritt 405 werden dann Fahrparameter gebildet entsprechend der überwachten Fahrzeugführung, also insbesondere auf den vorgenannten beispielhaften Messwerten. Diese Fahrparameter werden dann der klassifizierten Fahrsituation, also hier dem Überholvorgang, zugeordnet und einem Fahrerassistenzsystem des Fahrzeugs bereitgestellt.

In einem Schritt 407 wird eine der obigen Fahrsituation zeitlich nachgeordnete weitere Fahrsituation erfasst und klassifiziert, bevor das Fahrerassistenzsystem das Fahrzeug steuert, also einen Eingriff in eine Fahrzeugführung selbstständig durchführen will. Es findet im Schritt 407 ferner eine Klassifizierung dieser weiteren Fahrsituation statt.

In einem Schritt 409 wird überprüft, ob es sich bei dieser weiteren Fahrsituation um ein Überholmanöver handelt.

Wenn dies der Fall ist, so wird in einem Schritt 411 das Fahrerassistenzsystem das Fahrzeug basierend auf den Fahrparametern steuern, die dem Überholmanöver zugeordnet sind. Dies bewirkt in vorteilhafter Weise, dass das Fahrerassistenzsystem das Fahrzeug während des Überholmanövers so steuern kann, wie es der Fahrer selbst tun würde.

Wenn im Schritt 409 festgestellt wird, dass es sich bei dieser weiteren Fahrsituation nicht um ein Überholmanöver handelt, so wird gemäß einem Schritt 413 das Fahrerassistenzsystem das Fahrzeug basierend auf Standardfahrparametern oder Standardsteuerungsdaten steuern, die beispielsweise fest im Fahrerassistenzsystem einprogrammiert oder abgespeichert sein können. Somit wird insbesondere sichergestellt, dass das Fahrerassistenzsystem stets das Fahrzeug steuern kann unabhängig davon, ob bereits Fahrparameter gebildet wurden, die einen Fahrstil des Fahrers beschreiben.

In einer nicht gezeigten Ausführungsform kann vorgesehen sein, dass im Schritt 413 die Fahrparameter aus einem Satz von Fahrparametern ausgewählt werden, die der weiteren Fahrsituation zugeordnet sind und die insbesondere analog zu dem Schritt 405 bereits gebildet wurden für die dann entsprechend vorliegende Fahrsituation.

Zusammenfassend umfasst also die Erfindung insbesondere den Gedanken, kontinuierlich oder dauernd eine Fahrzeugführung eines Fahrers eines Fahrzeugs, also allgemein gesprochen den Fahrstil des Fahrers, bei bestimmten Fahrsituationen zu überwachen und daraus entsprechende Fahrparameter zu bilden, die insbesondere ein allgemeintypisches Fahrerverhalten beschreiben können, also den Fahrstil. Insbesondere kann hier ein Durchschnitt über mehrere Fahrten gebildet werden.

Beispiele für solche Fahrsituationen können Überholmanöver, Kolonnenfahrt, Fahrt mit einer aktivierten adaptiven Geschwindigkeitsregeleinrichtung, Kurvenfahrt, teilautomatisierte Fahrt oder automatisierte Fahrt sein.

Bei einem Überholmanöver kann beispielsweise ein Abstand zu einem vorausfahrenden Fahrzeug gemessen werden. Beispielsweise kann ein Abstand zum Verkehr in rückwärtiger Richtung des Fahrzeugs bezogen auf die Fahrtrichtung gemessen werden. Insbesondere kann eine Größe einer Lücke zwischen dem zu überholenden Fahrzeug und einem dem zu überholenden Fahrzeug vorausfahrendes Fahrzeug gemessen werden. Insbesondere kann ein räumliches und/oder zeitliches Geschwindigkeitsprofil und/oder räumliches und/oder zeitliches Beschleunigungsprofil des Fahrzeugs gemessen werden.

Bei einer Fahrt mit einer aktivierten adaptiven Geschwindigkeitsregeleinrichtung und/oder einer Kolonnenfahrt kann beispielsweise ein Abstand zu einem vorausfahrenden Fahrzeug gemessen werden. Insbesondere kann ein Verhalten des Fahrers beim Einfahren eines anderen Fahrzeugs in die Lücke vor dem Fahrzeug und dem unmittelbar vorausfahrenden Fahrzeug erfasst werden.

Bei einer teilautomatisierten Fahrt und/oder automatisierten Fahrt können beispielsweise ein Fahrereingriff oder mehrere Fahrereingriffe während der teilautomatisierten oder automatisierten Fahrt erfasst werden. Beispielsweise kann erfasst werden, ob der Fahrer das Fahrzeug beschleunigt, also Gas gibt. Das ist in der Regel ein Hinweis darauf, dass das Fahrerassistenzsystem, das das Fahrzeug während der teilautomatisierten oder automatisierten Fahrt steuert, für den Fahrer zu langsam das Fahrzeug steuert und/oder einen Abstand zu einem vorausfahrenden Fahrzeug zu hoch oder groß regelt.

Wenn der Fahrer das Fahrzeug bei einer teilautomatisierten Fahrt und/oder automatisierten Fahrt abbremst, so ist dies in der Regel ein Hinweis darauf, dass ein Abstand zu dem unmittelbar vorausfahrenden Fahrzeug zu niedrig für den Fahrer ist und/oder dass das Fahrerassistenzsystem zu schnell für den Fahrer ist, also mit einer zu hohen Geschwindigkeit das Fahrzeug steuert.

Durch das Überwachen und des dann entsprechenden Bildens der Fahrparameter lernt das System oder die Vorrichtung, wie der Fahrer beispielsweise in bestimmten Fahrsituationen sein Fahrzeug steuert. Dies kann dann in vorteilhafter Weise imitiert oder nachgeahmt werden.

Eine Erweiterung oder Ergänzung oder Alternative zu der Durchschnittsbildung könnte beispielsweise sein, dass für entsprechende Berechnungen weitere Abhängigkeiten von dem Verhalten des Fahrers berücksichtigt werden. Das könnten zum Beispiel folgende Abhängigkeiten sein: Position/Route, Umweltbedingungen (zum Beispiel Wetter, Straßenzustand), Verkehrsbedingungen (zum Beispiel Stau, Ampeln), Tageszeit, Fahrerzustand (zum Beispiel Müdigkeit), die Anzahl von Personen im Auto (zum Beispiel alleine, mit mehreren, mit Kindern).

Mit Kenntnis dieses Fahrerverhaltens kann eine Steuerung des Fahrzeugs seitens eines Fahrerassistenzsystems individuell auf den Fahrer lernend über eine Zeit in vorteilhafter Weise angepasst werden.

Die Anpassung berücksichtigt vorzugsweise einen Abgleich mit den Verkehrsregeln (zum Beispiel Geschwindigkeitsvorgaben, Überholmanövervorgaben) und/oder eine Beschränkung auf eine sichere Fahrweise (zum Beispiel Mindestabstände, Maximalgeschwindigkeiten in Kurven).

## Patentansprüche

1. Verfahren zum Betreiben eines Fahrzeugs, wobei eine Fahrzeugführung eines Fahrers des Fahrzeugs überwacht wird (101), so dass basierend auf der überwachten Fahrzeugführung einen Fahrstil des Fahrers beschreibende Fahrparameter gebildet werden (103), welche einem Fahrerassistenzsystem des Fahrzeugs bereitgestellt werden (105), so dass bei einer Steuerung des Fahrzeugs mittels des Fahrerassistenzsystems der Fahrstil des Fahrers zumindest teilweise abgebildet wird (107).

2. Verfahren nach Anspruch 1, wobei eine während der Überwachung vorliegende Fahrsituation klassifiziert und die Fahrparameter der klassifizierten Fahrsituation zugeordnet werden (405), so dass, wenn eine bei der Steuerung des Fahrzeugs mittels des Fahrerassistenzsystems vorliegende Fahrsituation der klassifizierten Fahrsituation entspricht, das Fahrerassistenzsystem das Fahrzeug basierend auf den der klassifizierten Fahrsituation zugeordneten Fahrparametern steuert (411).

3. Verfahren nach Anspruch 2, wobei zur Klassifizierung die vorliegende Fahrsituation einer Fahrsituationsklasse ausgewählt aus der folgenden Gruppe von Fahrsituationenklassen zugeordnet wird: Überholmanöver, Kolonnenfahrt, Fahrt mit einer aktivierten adaptiven Geschwindigkeitsregeleinrichtung, Kurvenfahrt, teilautomatisierte Fahrt und automatisierte Fahrt.

4. Verfahren nach einem der vorherigen Ansprüche, wobei für die Überwachung zumindest ein Element ausgewählt aus der folgenden Gruppe von Elementen gemessen oder erfasst wird: Abstand zu einem dem Fahrzeug vorausfahrenden weiteren Fahrzeug, Abstand zu einem dem Fahrzeug nachfahrenden weiteren Fahrzeug, zeitliches und/oder räumliches Geschwindigkeitsprofil, zeitliches und/oder räumliches Beschleunigungsprofil, Fahrzeugposition, Größe einer Lücke zwischen einem dem Fahrzeug vorausfahrenden weiteren Fahrzeug und einem dem weiteren Fahrzeug vorausfahrenden anderen Fahrzeug, Fahrereingriffe in eine Fahrzeugführung, insbesondere Bremsen, Lenken, Beschleunigen, Lenken, Verhalten des Fahrers beim Einfahren eines anderen Fahrzeugs in die Lücke zwischen dem Fahrzeug des Fahrers und einem dem Fahrzeug des Fahrers vorausfahrenden weiteren Fahrzeug.

5. Verfahren nach einem der vorherigen Ansprüche, wobei während der Überwachung ein Fahrzeugumfeld erfasst und das Fahrzeugumfeld beschreibende Fahrzeugumfelddaten gebildet werden, die den Fahrparametern zugeordnet werden, so dass, wenn ein bei der Steuerung des Fahrzeugs mittels des Fahrerassistenzsystems vorliegendes Fahrzeugumfeld zumindest teilweise dem während der Überwachung erfassten Fahrzeugumfeld entspricht, das Fahrerassistenzsystem das Fahrzeug basierend auf den Fahrparametern mit den zugeordneten Fahrzeugumfelddaten steuert.

6. Verfahren nach einem der vorherigen Ansprüche, wobei eine Anzahl an Fahrzeuginsassen erfasst wird und den Fahrparametern zugeordnet wird, so dass, wenn eine Anzahl an Fahrzeuginsassen bei der Steuerung des Fahrzeugs mittels des Fahrerassistenzsystems gleich der Anzahl an Fahrzeuginsassen während der Überwachung ist, das Fahrerassistenzsystem das Fahrzeug basierend auf den Fahrparametern mit der zugeordneten Anzahl an Fahrzeuginsassen steuert.

7. Verfahren nach einem der vorherigen Ansprüche, wobei vor der Steuerung des Fahrzeugs mittels des Fahrerassistenzsystems die Fahrparameter mit einen sicheren Fahrstil beschreibenden Fahrsicherheitsparametern abgeglichen werden, so dass abhängig von dem Vergleich abgeglichene Fahrparameter gebildet werden, die dem Fahrerassistenzsystem bereitgestellt werden, so dass bei der Steuerung des Fahrzeugs mittels des Fahrerassistenzsystems der Fahrstil des Fahrers nur soweit abgebildet wird, wie dieser von dem sicheren Fahrstil umfasst ist.

8. Vorrichtung (201) zum Betreiben eines Fahrzeugs, umfassend eine Überwachungseinrichtung (203) zum Überwachen einer Fahrzeugführung eines Fahrers des Fahrzeugs, eine Parameterbildungseinrichtung (205) zum Bilden von einen Fahrstil des Fahrers beschreibenden Fahrparametern basierend auf der überwachten Fahrzeugführung und eine Bereitstellungseinrichtung (207) zum Bereitstellen der Fahrparameter an ein Fahrerassistenzsystem.

9. System (301) zum Betreiben eines Fahrzeugs, umfassend die Vorrichtung (201) nach Anspruch 8 und ein Fahrerassistenzsystem (303), das ausgebildet ist, basierend auf den bereitgestellten Fahrparametern das Fahrzeug den Fahrstil des Fahrers zumindest teilweise abbildend zu steuern.

10. Computerprogramm, umfassend Programmcode zur Durchführung des Verfahrens nach einem der Ansprüche 1 bis 7, wenn das Computerprogramm auf einem Computer ausgeführt wird.
